Europäisches Patentamt

(19) European Patent Office

Office européen des brevets

(11) Publication number: **0 120 079**
**B1**

(12) **EUROPEAN PATENT SPECIFICATION**

(45) Date of publication of patent specification: **16.08.89**

(51) Int. Cl.⁴: **B 65 D 23/02**

(21) Application number: **83903342.0**

(22) Date of filing: **26.09.83**

(86) International application number:
**PCT/US83/01504**

(87) International publication number:
**WO 84/01352 12.04.84 Gazette 84/10**

(54) **MULTIWALLED CONTAINER AND METHOD OF MAKING SAME.**

(30) Priority: **29.09.82 US 426269**

(43) Date of publication of application:
**03.10.84 Bulletin 84/40**

(45) Publication of the grant of the patent:
**16.08.89 Bulletin 89/33**

(84) Designated Contracting States:
**AT BE CH DE FR GB LI LU NL SE**

(56) References cited:
**DE-A-2 444 267**
**DE-C- 915 073**
**GB-A- 921 830**
**GB-A-1 211 769**
**US-A-2 802 309**
**US-A-3 144 167**
**US-A-3 703 255**
**US-A-4 013 748**
**US-A-4 079 851**
**US-A-4 092 391**

(73) Proprietor: **AMERICAN NATIONAL CAN COMPANY**
**8101 West Higgins Road**
**Chicago Illinois 60631 (US)**

(72) Inventor: **SAUER, Donald G.**
**Weingart Road**
**Harwinton, CT 06791 (US)**

(74) Representative: **Robinson, Anthony John Metcalf et al**
**Kilburn & Strode 30 John Street**
**London, WC1N 2DD (GB)**

## Description

### Technical Field

The present invention relates to containers in general and, in particular, to multiwalled plastic articles constituting containers or parisons therefor, particularly injection-molded or injection-blow-molded plastic containers having an inner barrier liner and an outer structural wall. More specifically, the invention is directed towards an improvement of the container rim design to prevent separation of the inner liner from the rim of the outer wall of the container and a method for producing such improved containers.

### Background Prior Art

This invention relates to multiwalled plastic containers which are comprised of an inner liner and outer structural wall supporting the liner. The liner material typically has barrier properties (such as with respect to moisture, oxygen, carbon dioxide, etc.) which are far superior to the plastic material forming the outer structural container wall. The container liner may be of a single layer or of a multi-layer design wherein each layer may be formed of a different material having a specific barrier property. Such containers are constructed of multiwalled or multi-layer design since all of the desired barrier properties generally cannot be provided by one material.

Various techniques for molding hollow plastic articles and containers are known in the prior art. By one technique, the multiwalled containers are produced by an injection-blow molding procedure. In producing containers by this procedure, a previously-thermoformed liner is positioned over a core rod in an injection-blow molding machine. The core rod is then positioned in the cavity of an injection-molding zone and an injectable heated thermoplastic resin is injected into such cavity to form a composite preform or parison, wherein the liner comprises the inner wall portion thereof. The core rod with the composite preform thereon is removed from such injection mold cavity and is positioned next in the cavity of a blow-molding zone. Fluid pressure is exerted on the preform between the preform and the core rod to an extent sufficient to make the preform expand into contact with adjacent wall portions defining the blow-mold cavity which results in the production of a blown container. The blown container is removed from the blow mold cavity and the blown container is then separated from the core rod. Specific details relating an apparatus, materials, and techniques for producing such containers can be found in U.S. Patent Nos. 4,162,883 and 4,309,380, both of which are granted to Donald G. Sauer and assigned to National Can Corporation.

One possible problem with some prior art multiwalled containers, wherein the inner liner and the outer wall have an exposed edge at the container lip, is that a separation of the liner from the rim of the structural outer wall may possibly occur under certain circumstances. Such liner separation, if it occurs, can produce a less-than-desirable appearance and can present sanitation problems.

One cause of the liner separation problem is that the prior art injection-molded or injection-blow-molded containers have a relatively small overlap between the lip of the liner and the outer wall rim region. Typically, the liner extends at most to the outer edge of the structural wall rim and terminates at the junction between the top rim surface and outer vehicle surface, or sidewall, of the outer wall. Another drawback in the design of the prior art containers is that the edge of the liner lip is exposed, thereby increasing the chance that the liner may be subjected to forces which can peel the liner away from the structural wall rim to create the aforementioned crevices. Moreover, the separation problem can be compounded by the fact that friction may be developed between the container closure and the inner liner overlap during the application or removal of the closure which can initiate or further propagate a separation. Also, in the case of prior art containers utilising a multi-layer liner, a separation of the individual layers at the liner lip can occur, resulting in additional crevices at which the container contents become trapped and present a further undesirable appearance. Containers suffering from these disadvantages are described in US-A-4013748 and 4079851. In particular, US-A-4013748 describes a method of producing a multiwalled plastic container having a first wall means and a second wall means, the method comprising producing a pre-formed thermo-plastic hollow second wall means, said second wall means having a sidewall having an inner and outer surface and defining an opening, placing said second wall means in an injection-mold cavity, having a molding surface to thereby provide a space between said second wall means and said molding surface, injecting a molten plastic material into said space to form said first wall means and removing said first and second wall means from said moulding cavity. In this case, the lip of the inner wall means is preformed and overlies part only of the rim of the outer wall with, in one case, a return portion which is embedded in the outer wall.

For the reasons set out above, it can be appreciated that a need exists for injection-molded or injection-blow-molded multiwalled containers having a liner sufficiently secured thereto in a manner which will eliminate or reduce the possibility of liner separation at the container rim and for methods of making such containers. This requirement is met by the present invention which provides a method of producing a multiwalled plastic article constituting a container or a parison therefor in accordance with the method described above and characterised in that said second wall means is produced with a circumferentially-extending lip about said opening, said lip forming an acute angle with said sidewall to provide a trough-like region; and when said plastic is injected into said space it enters the trough-like region, and re-forms the configuration of said lip, said injected plastic material forming a circumferential rim on said first wall means defining an opening and said injected plastic material forcing said lip against said molding surface to re-form said lip to wrap over and around said rim of said first wall means.

The invention thus provides a method of manufacturing a multiwalled plastic container or parison therefor by which the second wall means when initially produced has a relatively simple and easily produced lip which is subsequently reformed in the course of the injection of the material of the first wall means into the wrap-around form without any additional shaping step being required.

According to a second aspect the present invention, a hollow multiwalled article constituting a container or a parison therefor, the article having a wall means comprising first layer means and second layer means forming a container having an opening, said first layer means terminating at said opening, and having a circumferential rim having a top surface defining said opening, said second layer means being wrapped across said top surface and a part of an opposite surface of said rim, and said second layer means terminating in a circumferential edge which is at least partially embedded in said first layer means whereby separation of said first and second layer means is prevented at said top surface, is characterised in that both said layer means are of plastic material and said first layer means is injection molded into intimate contact with said second layer means, said second layer means in the portion which is wrapped across said top surface and a part of an opposite surface of said rim, having been reformed to produce the embedding.

It should be noted that GB-A-1211769 describes a multiwalled container in which an outer vessel of glass is provided with a separate liner of plastic material, the liner having a rim which overlies the rim of the glass vessel and part of the outer surface of the sidewall of the vessel adjacent the rim but in this case the liner is separately molded and its rim is merely a snap fit over the rim of the vessel.

It will thus be understood that the disadvantages of the prior art are overcome by providing a container wherein the inner liner has a lip configuration which wraps around the rim of the outer structural wall to provide an improved interlock therebetween, and hence, reduce the likelihood of liner separation at the container opening. The liner extends from the inner surface of the outer structural wall over its top rim surface and extends at least a short distance downwardly therefrom along the outer surface of the structural wall.

The downwardly-depending over-hand portion of the liner lip is recessed within the outer surface of the structural wall with the edge of the lip being covered and protected by the plastic material forming the outer wall. Such construction further resists a separation of the liner lip and the structural wall, and also reduces the possibility of separation of the individual layers of a multi-layer liner when such liners are utilised.

Attention may also be directed to GB-A-921830 which describes the manufacture of a beaker from resting parts pre-moulded in synthetic plastic and a pre-moulded pattern sheet of synthetic plastic and sandwiched between the nesting parts, the outer one of which is transparent. In one embodiment there is a stepped flange externally at the mouth of the inner moulding, the flange having an annular recess around its bottom edge which engages a complementary spigot, constituted by the top edge of the outer moulding, the two coupling components forming a wedge or other shaped tight fit and being cemented together. With this arrangement, the edge of the flange on the inner moulding outwards of the annular recess is not at all embedded in the outer moulding, the two parts are separate mouldings rather than one being moulded into intimate contact with the other, and there is no reforming of the rim to produce embedding. The beaker described in GB-A-921830 is quite different from the article of the present invention.

The multiwalled containers of the present invention may be formed by a pre-formed liner being inserted over a core rod and placed in an injection-mold and then a molten plastic material injected over the liner to form the outer structural wall of the container. The multiwalled containers may also be formed by injection-blow-molding which involves the additional step of blow-molding the liner over plastic material to expand the same to form the container body. The articles resulting from these steps may constitute the final product namely a container, or an intermediate product, namely a parison from which a container is made by a further operation. In forming such containers, a preformed liner is utilised. The pre-formed liner has a wall portion forming a hollow body with a circumferential lip formed around its opening and extending outwardly therefrom. The lip forms an acute angle, for example, approximately 30%, with the adjacent liner wall to provide a generally V-shaped trough-like region about the circumference of the opening. Later, during the injection-molding step of producing the container, the pre-formed liner lip is reformed to conform to the shape of adjacent surfaces of the injection mold when the injected plastic enters the trough-like region and forces the lip against the mold surfaces. Thus, the container rim area is formed to the desired configuration wherein the liner wraps around the rim of the plastic material forming the outer structural wall, and the structural plastic material covers and protects the circumferential edge of the liner.

Brief Description of Several Views of Drawings

The invention will be more clearly understood by reference to the following detail description of an exemplary embodiment thereof in conjunction with the accompanying drawings in which:

FIG. 1 is a sectional view of the multiwalled plastic container of the present invention;

FIG. 2 is an exploded sectional view of the right rim area of the container of FIG. 1 showing the over-wrapping liner lip configuration;

FIG. 3 is an exploded sectional view of the right rim area of a typical prior art plastic multiwalled container;

FIG. 4 is a sectional view of a preformed liner of the present invention for utilization in forming the multiwalled container of FIG. 1;

FIGS. 5-8 are sectional side views of the pressure box and male mold assemblies of a thermo-forming machine omitting some accessories for greater clarity, and sequentially illustrating the formation of the hollow preformed liner of FIG. 4;

FIG. 9 is a sectional side view of an injection-molding-station of an injection-blow-molding machine showing a core rod with the preformed liner of FIG. 4 thereon and positioned in the mold cavity prior to the injection of the plastic for forming the outer wall of the container of the present invention;

FIG. 10 is a sectional side view of the injection-molding station of FIG. 9 after injection of the plastic material for forming the outer wall of the container; and,

FIG. 11 is a sectional side view of the injection-mold station of an injection-mold machine showing the injection molding of a modified container of the present invention wherein the liner forms the outer layer of the container.

Detailed Description

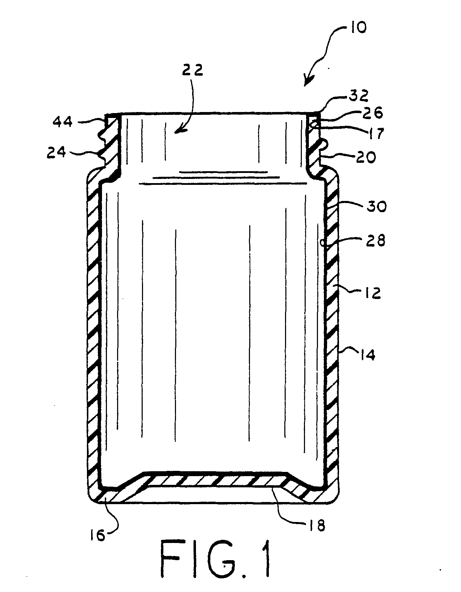

FIG. 1 shows a multiwalled container 10 formed in accordance with the present invention having a hollow outer structural wall or layer 12 which has a sidewall 14 and an end wall or bottom 16 which may have a domed portion 18 for increased strength. Sidewall 14 may also have a necked-in portion 20 terminating at an annular rim 26 forming container opening 22. As shown in FIG. 1, neck portion 20 has integrally-formed threads 24 for mating with a threaded closure (not shown) for sealing opening 22. Other conventional closure arrangements, such as adhesive applied, snap on, or crimped closures, for example, could also be utilized in conjunction with the container of the present invention.

As inner liner 28, typically of a thickness of approximately 0,051mm (.002 inches), is disposed within outer wall 12, which for example has a thickness of 1,65mm (.065 inches) in the neck region and a lesser thickness in the sidewall. Liner 28 preferably adheres fully to the inner surface 30 of outer wall 12. Liner 28 may be formed of a single layer or wall of barrier material, or may be of multiple-layer design wherein the layers may be formed of a different material, each having certain superior barrier properties, with respect to the moisture resistance, oxygen permeation resistance or carbon dioxide transmission, etc.

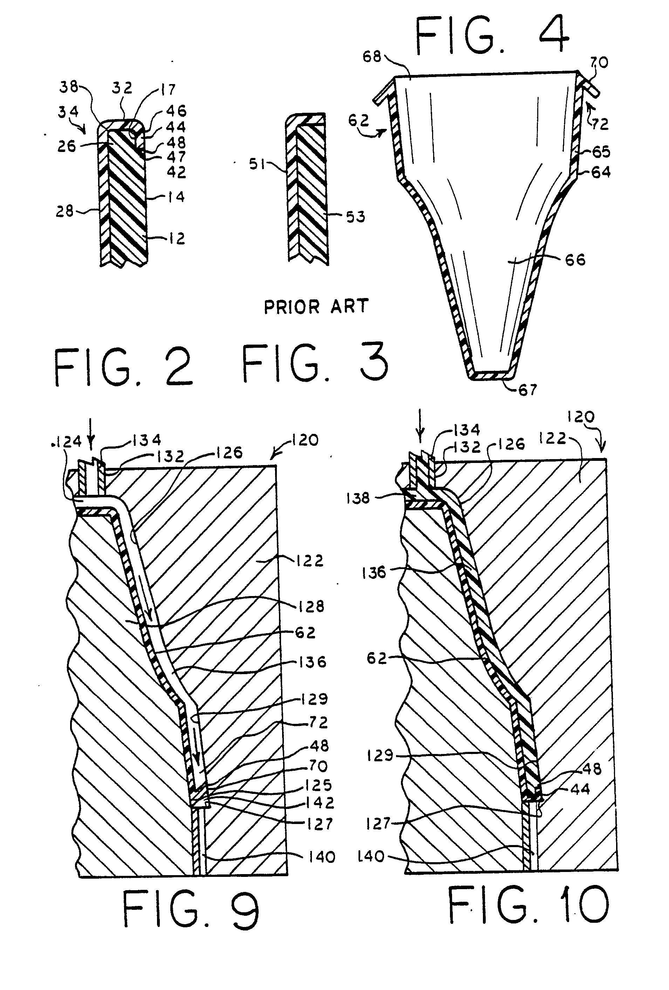

As best seen in FIG. 2, inner liner 28 has a circumferential lip 32 forming liner opening 34 at the top end of liner 28. Liner lip 32 extends from inner surface 38 of wall 14, over outer wall rim 26, and has a downwardly-depending overhanging leg portion 44 which extends along the outer surface 42 of structural wall sidewall 14. Thus, lip 32 is made to completely overwrap outer wall rim 26 and interlock therewith. The length of leg 44 may be on the order of approximately 1,52mm (.060 inches), although shorter or longer overhangs may also be employed. In the instance where a threaded closure is to be utilized for sealing opening 22, leg 44 of liner 28 preferably terminates above the first of threads 24 so as not to subject liner 28 to additional twisting forces generated during the application or removal of the closure. Of particular importance is that leg 44 is recessed within structural wall 14 with circumferential end surface or edge 48 of liner lip 32 abutting shoulder 47. Edge 48 is completely embedded in the plastic material forming outer structural sidewall 14 and the outer surface 46 of lip leg 44 may be flush with the outer surface 42 of sidewall 14. It is also possible that the recess may be spaced away from the top of rim 26 with leg 44 extending along sidewall 14 to enter the recess at a location spaced downwardly from rim 26.

Thus, it can be appreciated by comparison to the non-overhanging liner lip construction of a typical prior art plastic container having liner 51 and outer structural wall 53, as shown in FIG. 3, a number of advantages of the container of the present invention are apparent. First, the liner lip portion 32 completely overhangs and grips outer wall rim 26 to resist forces typically encountered by the container, which otherwise tend to cause a separation of liner 28 from wall 14. Moreover, the full and continuous wrapped-around configuration eliminates the chance of crevices forming on the top rim surface of the container to avoid the trapping of particles during the filling or dispensing of the container contents. Furthermore, since liner end 48 is flush against and protected by the plastic material of the wall 14, a peeling away of liner 28 or a separation of the individual liner layers is far less likely to be initiated. Thus, the container of the present invention effectively overcomes the disadvantages of the prior art liner lip construction and the associated problems of liner separation in the container rim region.

Liner and Container Production

The container of the present invention may be formed utilizing conventional thermo-forming and injection-blow-molding equipment, such as that described in aforementioned U.S. patent Nos. 4,162,883 and 4,309,380, respectively, with only minor modifications thereto, as will become readily apparent from the following description. Before describing the method of production of the pre-formed liner, it is first noted that its initial configuration of the pre-formed liner lip 70, as is shown in FIG. 4, is different than that assumed by the liner lip 32 after injection-molding or injection-blow-molding the finished container as shown in FIGS. 1 and 2.

Referring to FIG. 4, there is shown the pre-formed liner 62 for producing the container of the present invention. Liner 62 has a wall 64, including a sidewall 65 and a bottom 67, forming a hollow portion 66 with an opening 68. Wall 64 extends outwardly past opening 68 to form a circumferential lip 70 which together with the top of sidewall 65 forms a generally V-shaped portion, or trough-like region 72 of liner 62.

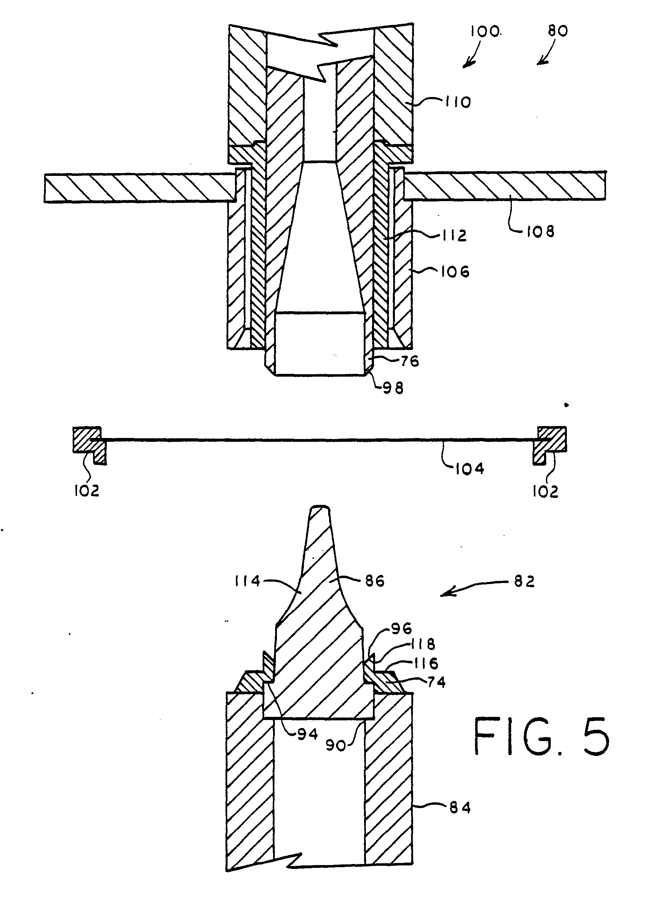

For producing the desired pre-formed liner configuration described above, a conventional thermo-forming apparatus, such as that disclosed in detail in U.S. Patent No. 4,162,883 may be employed. FIG. 5 illustrates the portion of the thermo-forming apparatus 80 necessary for an understanding of the manner in which the pre-formed liner 62 may be formed, and in particular, the novel punch 74 and cooperating swage tool 76 for forming the desired lip portion 70 of liner 62. Indicated at 82 is a male mold assembly which is supported by, and axially extendable from, a lower support platform (not shown) of the thermo-forming apparatus 80. Male mold assembly 82 includes a cylindrical base member 84 for supporting a generally conically-shaped male mold member or forming pin 86. Also comprising male mold assembly 82 is an annular punch 74 having an annular recess 94 which cooperates with shoulder 90 to fixedly secure forming pin 86 in place. Punch 74 is secured in place by suitable means, such as by bolting, to base member 84. Integrally-formed on punch 74 is annular bevelled surface 96 which cooperates with corresponding-bevelled tip 98 of swage tool 76 to form the desired lip configuration as hereinafter described.

The thermo-forming apparatus as shown in FIG. 5 also includes a feed mechanism 102 for positioning and advancing a sheet of thermo-plastic stock material 104 which is pre-heated to a deformable state by suitable means, such as radiant heaters, infrared lamps, etc. (not shown). In axial alignment with male mold assembly 82, and for cooperation therewith, is a pressure box assembly 100 positioned on the opposite side of sheet 104.

Pressure box assembly 100 independently performs the functions of isolating a disc-shaped portion of liner sheet stock 104 and applying the proper tension thereto, aiding the formation of the liner lip configuration, and thereafter trimming the formed liner from the remainder of the liner sheet stock. To accomplish these functions, pressure box assembly 100 includes cylindrical-shaped isolating frame 106 attached to plate 108, to which means (not shown) to axially advance and retract frame 106 are connected. Also, axially-advanceable and retractable by suitable means is cylindrical member 110 and die 112 mounted thereto for trimming the formed liner from the liner stock. Slideably-mounted within die 112 is swage tool 76, which likewise is connected to means which allow its independent advancement toward male mold assembly 82 and retraction therefrom.

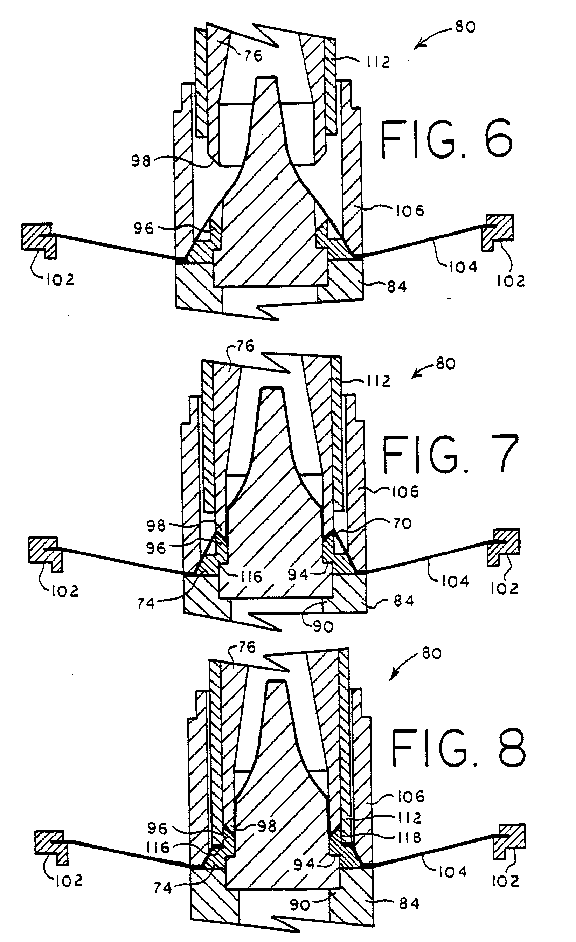

In operation, isolating frame 106 is first advanced towards the plane of sheet stock 104, which is spanned between feed mechanism means 102, to urge sheet 104 out of its initial plane. With the isolated disc-shaped portion of sheet 102 placed in the proper tension by frame 106 it receives and is formed by forming pin 86 as it is axially extended toward pressure box assembly 100. FIG. 6 shows forming pin 86 and isolating frame member 106 in the fully-advanced position with member 106 abutting against surface 116 of die 74 with sheet 104 therebetween. At this time, sheet 104 has been deformed to correspond to the contour of the body portion 114 of forming pin 86.

Next, as shown in FIG. 7, swage tool 76, with bevelled swage tip 98, is advanced to meet and cooperate with correspondingly bevelled surface 96 of punch 76 to thereby form pre-formed liner lip 70. After formation of lip 70, die 112 is advanced to the position shown in FIG. 8, passing along shearing surface 118 of punch 76 to cut pre-formed liner 62 away from the remainder of plastic sheet stock 104. Thereafter, male mold assembly 82 and pressure box assembly 104 are retracted to their respective initial positions and liner 62 is removed from forming pin 86.

Once the pre-formed liner has been formed, it is transferred to an injection molding machine or an injection-blow-molding machine which may be of the type described in said aforementioned U.S. Patent No. 4,309,380. Briefly, that machine is of a rotary type design wherein a square-shaped indexing platen or turret, with a plurality of core rods mounted on each side thereto, is rotated between four different operational stations. At the first station a pre-formed liner is fed onto the core rod and held in place by drawing a vacuum through a porous section of the core rod. At the second station, an injection mold is positioned around the core rod and liner. Thereafter, a molten plastic material, for forming the outer structural wall of the container, is injected over the outside surface of the liner. At the third station, a blow-mold is positioned around the core rod and air pressure is exerted through the core rod into the interior of the liner having the injected plastic thereover. The internal air pressure expands or blows the liner with plastic injected therearound against the interior wall of the blow mold, thus resulting in the final container body configuration. At the fourth station, the containers are ejected from the core rods, and the core rods thereafter indexed to the first station and the process is repeated.

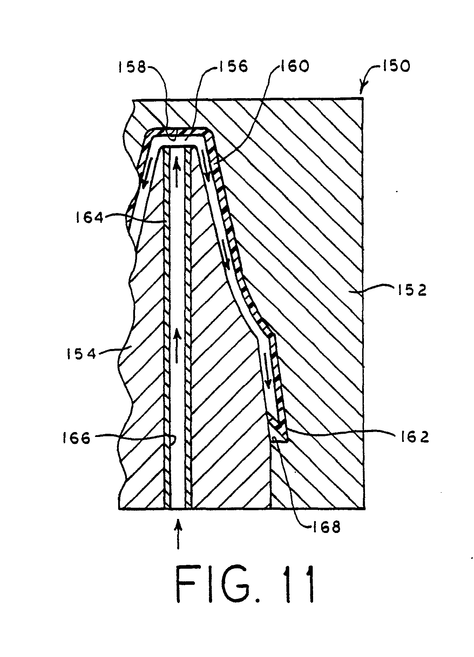

In respect to the present invention, it is the injection-molding operation which is of particular interest. In FIG. 9 there is shown the injection-molding station 120 which includes mold 122 with cavity 124 and molding surface 126. Molding surface 126 includes rimforming surface 127 and sidewall-forming surface 129. Positioned within cavity 124 is core rod 128 with liner 62 inserted over its outer surface. Liner lip 70 extends from the core rod's outer surface 125 with generally V-shaped portion forming a circumferential trough-like region 72 for reception of injected plastic.

Mold 122 also includes a bore 132 through which nozzle 134 is inserted for the injection of a plastic material into cavity 124 and around liner 62. As the molten plastic material is injected into the mold cavity 124, it fills the space 136 between liner 62 and molding surface 126 as it proceeds toward liner lip 70 following the arrows shown. As the plastic material 138 reaches the through-like region 72, the initially generally V-shaped configuration of lip portion 70 is re-formed to conform to the shape of the rim-molding surface 127 and sidewall-molding surface providing the desired overhanging lip configuration as seen in FIG. 10 or FIG. 2. To accomplish the desired reformation, an angle of approximately 20° to 60°, preferably about 30°, between lip 70 and the adjacent liner sidewall 64 has been found to be advantageous. However, depending upon the thickness of the outer wall and desired length of overlapping liner leg 44, it will be appreciated that any acute angle may have applicability to the present invention.

It is noted that as the liner lip 70 is forced downwardly by the introduction of plastic material 138, liner edge 48 slides along the sidewall mold surface wall 129 in sealing relationship thereto, thus preventing the passage of the injection plastic material 138 past liner lip 70. To aid the reformation of liner lip 70, mold 122 may include a bore 140 permitting the escape of air in space 142 so as not to hinder formation of the desired over-hanging lip configuration. However, it has been found that if the volume of space 142 is not excessive, the air therein may be relieved by passing upwardly between liner edge 48 and, mold surface 129 and thus, in such case, bore 140 is not required.

After complete injection of plastic material 138, mold 122 is removed from around core rod 128 and the injected-over liner 62 and core rod is indexed to the blow-molding station where the body of the container is blow-molded to the desired shape, as previously mentioned. Of course, it will be appreciated that a container of the present invention may also be formed by injection-molding as described above without the requirement of a blow-molding operation. Thus the injection moulding operation may produce a finished product, namely a container, in accordance with the invention or an intermediate product, namely a parison, in accordance with the invention, the parison being subjected to a blow moulding operation to produce the container which is the final product.

The container may be formed with an inner structural wall with a liner on the outside of the container. In such a container, the liner is once again positioned so that it wraps over and around the rim of the container with the circumferential edge of the liner lip embedded in the structural wall. Thus, a cross-sectional view of the left side of the rim area of an outer liner/inner structural wall arrangement will be identical to that shown in FIG. 2, which, as will be recalled, also shows the right side of a cross-sectional view of the preferred inner liner/outer structural wall embodiment of the present invention.

In FIG. 11, it is shown a modified injection-molding station 150 whereat the modified container may be formed. Station 150 includes female mold member 152 and male mold member 154 forming a space 156 therebetween. Positioned along the inner surface 150 of female mold member 152 is a pre-formed liner 160 which may be held in place against surface 158 by suitable means such as a vacuum drawn through female mold member 152.

Liner 60 is identical to the liner described in conjunction with the preferred embodiment except that liner 160 has an inwardly-, rather than outwardly-, extending circumferential lip 162 about its opening. With male mold member 154 axially moved inwardly into position within female mold member 152 as is shown in FIG. 11, a thermo-plastic material is injected through nozzle 164 fitted within bore 166 of male molding member 154. The thermo-plastic material follows the path of the arrows shown in FIG. 11 so that space 156 between the male mold 154 and the liner 160 is filled with the injected plastic to form the inner structural wall. In a manner similar to that described in connection with the preferred embodiment, the injected plastic forces liner lip 162 downwardly against rim-forming surface 168 of female mold 152 to re-form the lip 162 into the desired over-hanging and over-wrapping lip configuration, as shown in FIG. 2 and described above. Liner 162 with the injected plastic wall on this inner surface is removed from the male molding station 150 and thereafter may be transferred to a blow-molding station and an expanded container body can be blow-molded as previously described.

## Claims

1. A method of producing a multiwalled plastic article constituting a container or a parison therefor, the article having a first wall means (12) and a second wall means (28, 160), which method comprises producing a pre-formed thermo-plastic hollow second wall means (28, 160), said second wall means having a sidewall (14) having an inner and outer surface and defining an opening, placing said second wall means (28, 160) in an injection-mold cavity (124), having a molding surface (126, 127) to thereby provide a space between said second wall means and said molding surface, injecting a molten plastic material into said space to form said first wall means (12) and removing said first and second wall means from said molding cavity, characterised in that said second wall means is produced with a circumferentially-extending lip (32) about said opening, said lip (32) forming an acute angle with said sidewall (14) to provide a trough-like region (72); and when said plastic is injected into said space it enters the trough-like region (72), and re-forms the configuration of said lip, said injected plastic material forming a circumferential rim on said first wall means defining an opening and said injection plastic material forcing said lip against said molding surface (127) to reform said lip to wrap over and around said rim of said first wall means (12).

2. A method according to Claim 1, wherein said reformation of said lip produces an edge which is embedded in said first wall means and has an outer surface that is flush with an adjacent surface of said first wall means.

3. A hollow multiwalled article constituting a container (10) or a parison therefor, the article having a wall means comprising first layer means (12) and second layer means (28, 160) forming a container having an opening (34), said first layer means (12) terminating at said opening and having a circumferential rim (26) having a top surface defining said opening (34), said second layer means (28, 160) being wrapped across said top surface and a part of an opposite surface (42) of said rim, and said second layer means (28, 160) terminating in a circumferential edge (48) which is at least partially embedded in said first layer means (12) whereby separation of said first and second layer means is prevented at said top surface, characterised in that both said layer means are of plastic material and said first layer means is injection moulded into intimate contact with said second layer means, said second layer means in the portion which is wrapped across said top surface and a part of an opposite surface of said rim having been reformed to produce the embedding.

4. An article according to Claim 3, wherein said second layer means (28) forms the inner layer of said container and said first layer means (12) forms the outer layer of said container.

5. An article according to Claim 3 or Claim 4, wherein said first layer means (12) has a circumferential recess (17) extending from said top surface along said opposite surface (42) and said second layer means (28, 160) is within said recess (17).

6. An article according to Claim 5, wherein said recess (17) forms a shoulder (47) in said first layer means (12) spaced from said rim, and said second layer means (28, 160) has an edge (46) that abuts against said shoulder to protect said edge (46) to further prevent separation of said first and second layer means.

7. An article according to Claim 5 or Claim 6, wherein said recess (17) is dimensioned such that an exposed surface of said second layer means in said recess (17) is flush with said opposite surface (42) of said first layer means.

8. An article according to any of Claims 3 to 7, wherein said first layer means (12) provides structural properties for said container (10) and said second layer means (28, 160) is a thin liner formed of a material having barrier properties.

**Patentansprüche**

1. Verfahren zur Herstellung eines mehrwandigen Kunststoffgegenstandes, der einen Behälter oder eine Meßform dafür bildet und eine erste Wand (12) und eine zweite Wand (28, 160) aufweist, bei dem eine vorgeformte thermoplastische hohle zweite Wand (28, 160) hergestellt wird, die eine Seitenwand (14) mit einer inneren und einer äußeren Oberfläche aufweist und eine Öffnung bildet, die zweite Wand (28, 160) in den Hohlraum (124) einer Spritzgußform eingebracht wird, der eine Formoberfläche (126, 127) aufweist, so daß ein Zwischenraum zwischen der ersten Wand und der Formoberfläche gebildet wird, geschmolzener Kunststoff zur Bildung der ersten Wand (12) in diesen Zwischenraum eingespritzt wird, und die erste und die zweite Wand aus dem Formhohlraum entfernt werden, dadurch gekennzeichnet, daß die zweite Wand mit einer über dieser Öffnung rundumlaufenden Lippe (32) ausgebildet ist, wobei die Lippe (32) einen spitzen Winkel mit der Seitenwand (14) bildet, so daß ein rinnenartiger Bereich (72) entsteht, und daß beim Einspritzen des Kunststoffes dieser in den rinnenartigen Bereich (72) einfließt und die Form der Lippe nachbildet, wobei der eingespritzte Kunststoff einen umlaufenden Rand an der ersten Wand bildet und eine Öffnung definiert, und der Spritzkunststoff die Lippe gegen die Formoberfläche (127) drückt, sodaß die Lippe nachgebildet wird, die sich dann über den Rand der ersten Wand (12) und an ihm entlang herumbiegt.

2. Verfahren nach Anspruch 1, dadurch gekennzeichnet, daß durch die Nachbildung der Lippe eine Kante entsteht, die in der ersten Wand eingebettet ist und eine äußere Oberfläche aufweist, die mit der angrenzenden Oberfläche der ersten Wand fluchtet.

3. Hohler mehrwandiger, einen Behälter (10) oder eine Meßform dafür bildender Gegenstand, der eine Wand mit einer ersten Schicht (12) und einer zweiten Schicht (28, 160) aufweist, die einen Behälter mit einer Öffnung (34) bilden, wobei die erste Schicht (12) an der Öffnung endet und einen umlaufenden Rand (26) aufweist, dessen obere Oberfläche die Öffnung (34) definiert, und die zweite Schicht (28, 160) um die obere Oberfläche und einen Teil einer gegenüberliegenden Fläche (42) herumgebogen ist und in einer umlaufenden Kante (48) endet, die wenigstens teilweise in der ersten Schicht (12) eingebettet ist, wodurch eine Trennung der ersten und der zweiten Schicht an dieser oberen Fläche verhindert wird, dadurch gekennzeichnet, daß beide Schichten aus Kunststoff bestehen, daß die erste Schicht durch Spritzgießen in eine enge Verbindung mit der zweiten Schicht gebracht ist und die zweite Schicht an demjenigen Teil, der um die obere Oberfläche und einen Teil der gegenüberliegenden Fläche des Randes herumgebogen ist, so umgeformt ist, daß die Einbettung gewährleistet ist.

4. Gegenstand nach Anspruch 3, dadurch gekennzeichnet, daß die zweite Schicht (28) die innere Schicht des Behälters und die erste Schicht (12) die äußere Schicht des Behälters bildet.

5. Gegenstand nach Anspruch 3 oder 4, dadurch gekennzeichnet, daß die erste Schicht (12) einen umlaufenden Rücksprung (17) aufweist, der sich von der oberen Oberfläche entlang der gegenüberliegenden Fläche (42) erstreckt, und daß die zweite Schicht (28, 160) in diesen Rücksprung (17) eingebettet ist.

6. Gegenstand nach Anspruch 5, dadurch gekennzeichnet, daß der Rücksprung (17) einen Absatz (47) in der ersten Schicht (12) bildet, der von dem Rand beabstandet ist, und daß die zweite Schicht (28, 160) eine Kante (46) aufweist, die auf dem Absatz aufliegt, so daß die Kante (4) geschützt und außerdem die Trennung der ersten und der zweiten Schicht verhindert ist.

7. Gegenstand nach Anspruch 5 oder 6, dadurch gekennzeichnet daß der Rücksprung (17) so dimensioniert ist daß eine freiliegende Oberfläche der zweiten Schicht in dem Rücksprung (17) mit der gegenüberliegenden Fläche (42) der ersten Schicht fluchtet.

8. Gegenstand nach einem der Ansprüche 3 bis 7, dadurch gekennzeichnet, daß die erste Schicht (12) strukturelle Eigenschaften für den Behälter (10) aufweist und daß die zweite Schicht (28, 160) einen dünnen Belag darstellt, der aus einem Stoff mit Isoliereigenschaften besteht.

**Revendications**

1. Procédé de fabrication d'un article en matière plastique à parois multiples constituant un récipient ou une paraison de celui-ci, l'article comprenant une première partie formant paroi (12) et une seconde partie formant paroi (28, 160), ce procédé consistant à produire une seconde partie formant paroi (28, 160) creuse, en matière thermoplastique préformée, ladite seconde partie formant paroi comportant un flanc (14) pourvu d'une surface intérieure et d'une surface extérieure et définissant une ouverture, à placer ladite seconde partie formant paroi (28, 160) dans une cavité (124) d'un moule à injection, comportant une surface de moulage (126, 127) pour créer ainsi un espace entre ladite seconde partie formant paroi et ladite surface de moulage, à injecter une matière plastique fondue dans ledit espace pour former ladite première partie formant paroi (12) et à enlever lesdites première et seconde parties formant parois de ladite cavité de moulage, caractérisé en ce que ladite seconde partie formant paroi est formée avec une lèvre (32) s'étendant circonférentiellement autour de ladite ouverture, ladite lèvre (21) faisant un angle aigu avec ledit flanc (14) pour créer une zone (72) analogue à un auget; et quand ladite matière plastique est injectée dans ledit espace, elle pénètre dans ladite zone (72) en forme d'auget et remet en forme la configuration de ladite lèvre, ladite matière plastique injectée formant un rebord circonférentiel sur ladite première partie formant paroi définissant une ouverture, et ladite matière plastique d'injection refoulant ladite lèvre contre ladite surface de moulage (127) pour remettre en forme ladite lèvre afin de l'enrouler sur et autour dudit rebord de ladite première partie formant paroi (12).

2. Procédé selon la revendication 1, caractérisé en ce que ladite remise en forme de ladite lèvre produit un bord qui est noyé dans ladite première partie formant paroi et comporte une surface extérieure qui est en affleurement avec une surface adjacente de ladite première partie formant paroi.

3. Article creux à parois multiples constituant un récipient (10) ou une paraison de celui-ci, l'article comportant une paroi comprenant une première couche (12) et une seconde couche (28, 160) formant un récipient pourvu d'une ouverture (34), ladite première couche (12) se terminant à ladite ouverture et comportant un rebord circonférentiel (26) pourvu d'une surface supérieure définissant ladite ouverture (34), ladite seconde couche (28, 160) étant enroulée sur ladite surface supérieure et une partie d'une surface opposée (42) dudit rebord, et ladite seconde couche (28, 160) se terminant par un bord circonférentiel (48) qui est au moins partiellement encastré dans ladite première couche (12), afin d'empêcher une séparation desdites première et seconde couches au niveau de ladite surface supérieure, caractérisé en ce que les deux couches précitées sont formées d'une matière plastique et ladite première couche est moulée par injection en contact intime avec ladite seconde couche, ladite seconde couche, dans la partie qui est enroulée sur ladite surface, et une partie d'une surface opposée de ladite bordure ayant été remises en forme pour produire l'encastrement.

4. Article selon la revendication 3, caractérisé en ce que ladite seconde couche (28) forme la couche intérieure dudit récipient et ladite première couche (12) forme la couche extérieure dudit récipient.

5. Article selon la revendication 3 ou la revendication 4, caractérisé en ce que ladite première couche comporte un évidement circonférentiel (17) s'étendant depuis ladite surface supérieure le long de ladite surface opposée (42) et ladite seconde couche (28, 160) est située à l'intérieur dudit évidement (17).

6. Article selon la revendication 5, caractérisé en ce que ledit évidement (17) forme dans ladite première couche (12) un épaulement (47) espacé dudit rebord, et ladite seconde couche (28, 160) comporte un bord (46) qui vient buter contre ledit épaulement pour protéger ledit bord (46) afin d'empêcher encore une séparation desdites première et seconde couches.

7. Article selon la revendication 5 ou la revendication 6, caractérisé en ce que ledit évidement (17) est dimensionné de telle sorte qu'une surface exposée de ladite seconde couche située dans ledit évidement (27) soit en affleurement avec ladite surface opposée (42) de ladite première couche.

8. Article selon l'une quelconque des revendications 3 à 7, caractérisé en ce que ladite première couche (12) confère des propriétés structurales audit récipient (10) et ladite seconde couche (28, 160) est un revêtement mince formé d'un matériau ayant des propriétés de barrière.

FIG. 1

# FIG. 4

# FIG. 2

# FIG. 3

PRIOR ART

# FIG. 9

# FIG. 10

100   80

110

112   108

106

76

98

102   104   102

114   86   82

96
118
116
74

94   90

84

FIG. 5

3

FIG. 6

FIG. 7

FIG. 8

4

FIG. 11